# EUROPÄISCHE PATENTSCHRIFT

(11) **EP 0 865 962 B1**
(45) Veröffentlichungstag und Bekanntmachung des Hinweises auf die Patenterteilung: **07.11.2001**
(21) Anmeldenummer: 98102393.0
(22) Anmeldetag: 12.02.1998
(51) Int. Cl.: B60N 3/10

(54) **Behälter in einem Kraftfahrzeug zum Aufbewahren von Getränken**
Container in a motor car for the storage of beverages
Conteneur dans un véhicule automobile pour le rangement de boissons

(30) Priorität: 21.03.1997 DE 19711832
(43) Veröffentlichungstag der Anmeldung: 23.09.1998
(73) Patentinhaber: Johnson Controls Interiors GmbH & Co. KG, 42285 Wuppertal (DE)
(72) Erfinder: Mieglitz, Hans-Helmut, 40789 Monheim (DE); Gross, Andreas, 42697 Solingen (DE); Mai, Alfred, 42499 Hückeswagen (DE)
(74) Vertreter: Zapf, Christoph, Dipl.-Ing.

(56) Entgegenhaltungen:
- DE-A- 3 739 151
- DE-A- 4 000 322
- US-A- 4 892 138
- US-A- 5 203 833
- PATENT ABSTRACTS OF JAPAN vol. 97, no. 2, 28.Februar 1997 & JP 08 268135 A (NISSAN SHATAI CO LTD), 15.Oktober 1996,

## Beschreibung

Die Erfindung betrifft einen Behälter in einem Kraftfahrzeug zum Aufbewahren von Getränken und/oder Lebensmitteln.

Aus der deutschen Offenlegungsschrift 35 12 808 ist ein gattungsgemäßer Dosenhalter in einem Kraftfahrzeug in einem Handschuhfach, das mit einer Klappe verschließbar ist, beschrieben, der eine Halterungsplatte, in welcher eine kreiszylindrische Dosenaufnahmevertiefung ausgebildet ist, aufweist, wobei die Halterungsplatte am fahrerseitigen Seitenrand der Klappe derart anbringbar gestaltet ist, daß die Halterungsplatte bei geöffneter Klappe wenigstens annäherend horizontal ausgerichtet ist. Beim Zuklappen der Klappe bewegt sich diese Halterungsplatte auf einem Bogen, so daß eine darauf gestellte, geöffnete Dose vor dem Zuklappen aus der Halterungsplatte entnommen werden muß, um ein Verschütten des Inhalts zu vermeiden.

Ein weiterer Dosenhalter in einem Kraftfahrzeug ist in der US-Patentschrift 5 297 709 beschrieben. Dieser Dosenhalter ist schubladenartig ausziehbar ausgebildet, nachdem er in eine waagerechte Stellung heruntergeklappt wurde. Dieser Dosenhalter ist nur im geöffneten Zustand zum Aufnehmen einer Getränkedose geeignet, die somit vor dem Einschieben und Hochklappen stets daraus entnommen werden muß.

Für die Aufbewahrung von Getränken in Behältern, wie Handschuhkasten, Stauboxen oder Tunnelkonsolengehäusen mit Staumöglichkeit ist es wünschenswert, eine Kühlung vorzusehen. Des weiteren ist es wünschenswert, auch angebrochene Getränke in einen gekühlten Aufbewahrungsbehälter zurückführen zu können, ohne den Inhalt zu verschütten. Schließlich ist es auch wünschenswert, die Aufbewahrung von angebrochenen Getränken sowohl bei geöffnetem als auch geschlossenem Behälter so zu gewährleisten, daß keine Verschmutzungsgefahr gegeben ist.

Ausgehend von dieser Problemstellung wird ein Behälter mit den Merkmalen des Anspruchs geschaffen. In einem Kraftfahrzeug kann der Behälter an ein Zufuhrsystem kühler Luft zum Kühlen von darin aufbewahrten Getränken angeschlossen sein. Dieses Zufuhrsystem kühler Luft kann an das im Armaturentafelbereich eines Kraftfahrzeugs ohnehin vorhandene, umfangreiche Luftführungssystem angeschlossen sein und vorzugsweise mit einer Umschaltung der Luftzufuhr zwischen kühler Außenluft und von einer Klimaanlage erzeugter kühler Luft versehen sein.

Auf diese Weise ist es möglich, dem Behälter im Winter kühle Außenluft zuzuführen, auch wenn dem Kraftfahrzeuginnenraum erwärmte Luft zugeführt wird, während im Sommer dem Behälter von einer Klimaanlage erzeugte kühle Luft zugeführt wird.

Um beim Öffnen des Behälters nicht einem unangenehmen Strahl kühler Luft ausgesetzt zu sein, kann am Behälter eine Absperrschaltung für die kühle Luft beim Öffnen vorgesehen sein.

Vorzugsweise kann die kühle Luft einem Handschuhkasten in einer Armaturentafel des Kraftfahrzeugs zugeführt werden, jedoch ist dies auch bei an anderer Stelle im Kraftfahrzeug angeordneten Stauboxen oder Tunnelkonsolengehäusen mit Staumöglichkeit durchführbar.

Wenn die kühle Luft dem Handschuhkasten in der Armaturentafel zugeführt wird, kann das Zufuhrsystem kühler Luft bevorzugterweise in einer Öffnung in einer Seitenwand des Handschuhkastens münden und kann ein ausklappbarer Deckel des Handschuhkastens eine zur Seitenwand des Handschuhkastens benachbarte und dazu parallel bewegliche, die Öffnung in der geöffneten Stellung verdeckende Seitenwand mit einer in der geschlossenen Stellung mit der Öffnung in der Seitenwand des Handschuhkastens fluchtender Öffnung aufweisen.

Durch diese Anordnung läßt sich ohne großen Aufwand kühle Luft vom Luftkühlungssystem im Armaturentafelbereich abzweigen und dem Handschuhkasten in der geschlossenen Stellung des ausklappbaren Deckels zuführen, während diese Zufuhr kühler Luft in der geöffneten Stellung des Handschuhkastendeckels abgesperrt ist.

Um auch angebrochene Getränke in Getränkedosen bzw. Bechern oder Flaschen ohne Gefahr der Verschmutzung in den Behälter zum Weiterkühlen einbringen zu können, weist der Behälter eine an einem ein- und ausklappbaren Behälterdeckel angeordneten, schwenkbaren Getränkedosenhalter und eine den Getränkedosenhalter bei dem Ein- und Ausklappen waagerecht haltende Führungskinematik auf.

Durch diese Führungskinematik bleibt eine auf dem Getränkedosenhalter abgestellte Getränkedose, ein Becher oder eine Flasche beim Ein- und Ausklappen stets waagerecht stehen, so daß der Inhalt nicht verschüttet werden kann und somit auch keine Verschmutzungsgefahr gegeben ist.

Der Getränkedosenhalter ist in einem um eine waagerechte Achse nach unten klappbaren Handschuhkasten angeordnet, wobei die Führungskinematik für den Getränkedosenhalter in der Art verwirklicht ist, daß der Getränkedosenhalter an seiner, einem Scharnier des Handschuhkastendeckels abgewandten Seite an der Innenseite des Handschuhkastendeckels angelenkt ist und ein von der Anlenkung des Getränkedosenhalters am Handschuhkastendeckel beabstandeter Zapfen einen Schlitz in einer Seitenwand des Handschuhkastendeckels durchgreift sowie in eine schlitzartige Führung in einer benachbarten Seitenwand des Handschuhkastens eingreift, wobei diese Schlitze unter einem Winkel so zueinander angeordnet sind, daß der Getränkedosenhalter beim Ein- und Ausklappen waagerecht gehalten wird.

Die Erfindung wird nachstehend anhand eines in der Zeichnung dargestellten Ausführungsbeispiels des näheren erläutert.

In der Zeichnung zeigen:
- Fig. 1: eine schematische Schnittansicht eines Handschuhkastens mit voll ausgeklapptem Handschuhkastendekkel und darauf angeordnetem Getränkedosenhalter,
- Fig. 2: eine schematische Schnittansicht gemäß Fig. 1 mit halb eingeklapptem Handschuhkastendeckel,
- Fig. 3: eine schematische Schnittansicht gemäß Fig. 1 mit vollständig geschlossenem Handschuhkastendeckel und

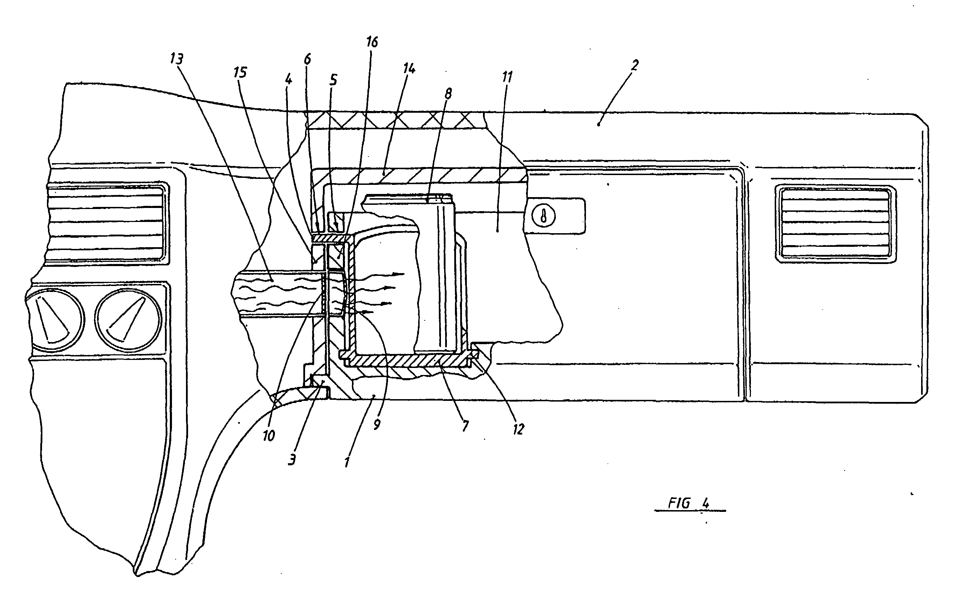

- Fig. 4: eine schematische Vorderansicht einer Armaturentafel mit einem teilweise aufgebrochen dargestellten Handschuhkasten und Getränkedosenhalter.

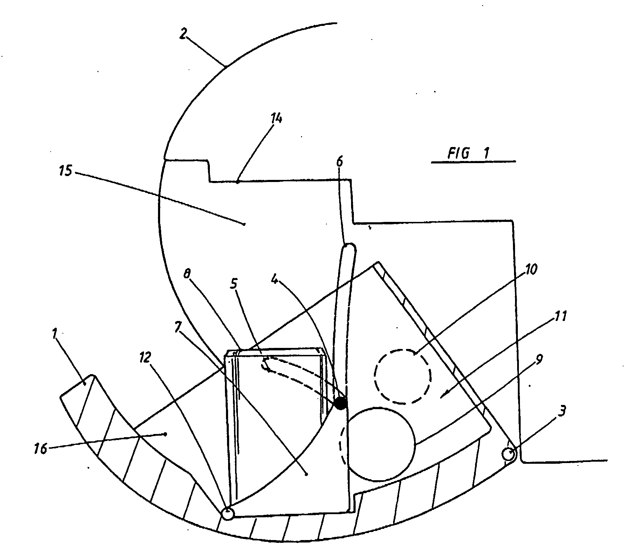

In einer Armaturentafel 2 ist in üblicher Weise ein Handschuhkasten 14 angeordnet. Dieser Handschuhkasten 14 läßt sich mittels eines Handschuhkastendeckels 1 verschließen. Der Handschuhkastendeckel 1 ist im unteren, rückwärtigen Bereich des Handschuhkastens 14 mittels eines Scharniers 3 angelenkt, so daß der Handschuhkastendeckel 1 beim öffnen in die in Fig. 1 dargestellte Stellung herunterklappt. In einem seitlichen Bereich eines Handschuhkastenstauraums 11, der oberhalb des Handschuhkastendeckels 1 gebildet ist, ist ein Getränkedosenhalter 7 mittels einer scharnierartigen Anlenkung 12 schwenkbar gelagert. Dieses Scharnier 12 befindet sich auf der dem Scharnier 3 des Handschukastendeckels 1 abgewandten Seite des Getränkedosenhalters 7. Auf dem Getränkedosenhalter 7 ist eine Getränkedose 8 stehend dargestellt. Ein von der Anlenkung 12 beabstandeter, auf der dem Scharnier 3 des Handschuhkastendekkels 1 zugewandten Seite des Getränkedosenhalters 7 angeordneter, waagerechter Zapfen 4 durchgereift einen Schlitz 5 in einer Seitenwand 16 des Handschuhkastendeckels 1 und greift des weiteren in eine schlitzartige Führung 6 in einer Handschuhkastenseitenwand 15 des Handschuhkastens 14 ein.

Zur Seitenwand 15 führt ein Luftkanal 13 und endet in einer Öffnung 10 der Handschuhkastenseitenwand 15. Eine entsprechende Seitenwandöffnung 9 ist in der Seitenwand 16 des Handschuhkastendeckels 1 angeordnet und bildet eine Austrittsdüse. In der in Fig. 1 dargestellten Stellung ist die Seitenwandöffnung 9 in der Seitenwand 16 des Handschuhkastendeckels 1 aus dem Bereich der Öffnung 10 in der Handschuhkastenseitenwand 15 des Handschuhkastens 14 herausgeschwenkt, so daß die Öffnung 10 durch die Seitenwand 16 des Handschukastendeckels 1 verschlossen ist und der Kühlluftzutritt zum Handschuhkasten 14 bzw. dem Handschuhkastenstauraum 11 unterbrochen ist.

Der Luftkanal 13 ist in nicht dargestellter Weise an ein Luftkühlungssystem im Bereich der Armaturentafel 2 angeschlossen und kann eine nicht dargestellte Umschaltung für die Luftzufuhr aufweisen, um dem Handschuhkastenstauraum 11 kühle Außenluft zuzuführen, wenn die Wagenheizung eingeschaltet ist oder von einer Klimaanlage erzeugte kühle Luft zuzuführen, wenn diese eingeschaltet ist.

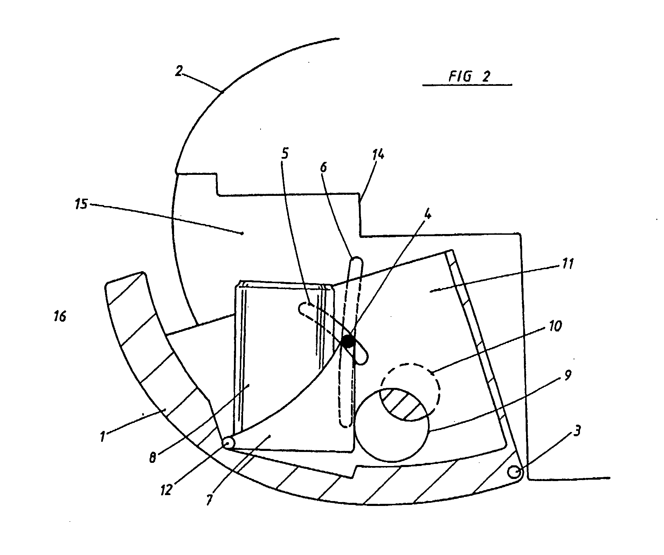

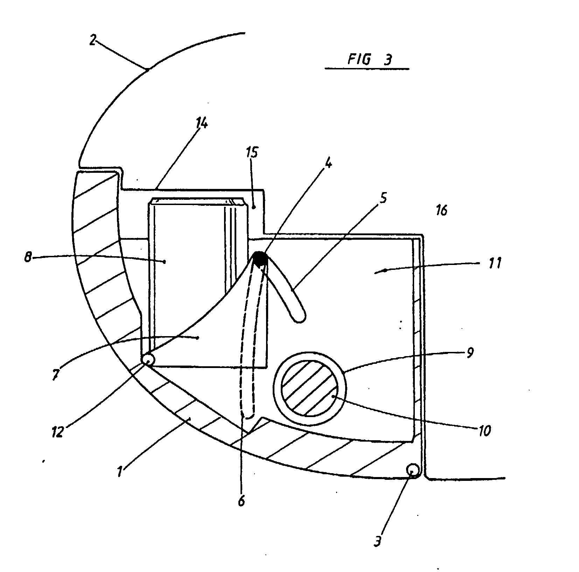

Beim Hochklappen des Handschuhkastendeckels 1 wird, wie aus Fig. 2 und 3 ersichtlich, der Getränkedosenhalter 7 durch den den Schlitz 5 durchgreifenden und in die schlitzartige Führung 6 eingereifenden Zapfen 4 stets waagerecht geführt, so daß der Inhalt der Getränkedose 8, selbst wenn sie geöffnet ist, beim Auf- und Zuklappen nicht verschüttet wird.

Selbstverständlich sind andere Behälter denkbar, die dieselbe Funktion erfüllen. Insbesondere kann der Getränkedosenhalter an einem Deckel einer Staubox oder eines Tunnelkonsolengehäuses mit Staumöglichkeit angebracht sein.

Dies gilt insbesondere für Konsolenstauboxen wie sie in der deutschen Offenlegungsschrift 35 12 808 derselben Anmelderin beschrieben sind.

## Patentansprüche

1. Behälter (14) für Getränkedosen in einem Kraftfahrzeug, mit einem an einer Seitenwand (16) eines ein- und ausklappbaren Behälterdeckels (1) angeordneten Getränkedosenhalters (7), wobei der Getränkedosenhalter (7) bei ausgeklapptem Behälterdeckel (1) waagerecht gehaltend ist,
**dadurch gekennzeichnet, dass** der Getränkedosenhalter (7) an seiner einem Scharnier (3) des Behälterdeckels (1) abgewandten Seite an der Seitenwand (16) mittels einer Anlenkung (12) angelenkt ist und ein von der Anlenkung (12) beabstandeter Zapfen (4) des Getränkedosenhalters (7) einen Schlitz (5) in der Seitenwand (16) des Behälterdeckels (1) durchgreift, sowie in einer schlitzartigen Führung (6) in einer benachbarten Seitenwand (15) des Behälters (14) eingreift, wobei der Schlitz (5) und die Führung (6) mittels einer Führungskinematik (4, 5, 6) derart zueinander angeordnet sind, dass der Getränkedosenhalter (7) beim Ein- und Aufklappen des Behälterdeckels (1) waagerecht gehalten wird.

2. Behälter nach Anspruch 1, **dadurch gekennzeichnet, dass** der Behälterdeckel (1) als ein um eine waagerechte Achse nach unten klappbarer Handschuhkastendeckel ausgeführt ist.

3. Behälter nach Anspruch 1 oder 2, gekennzeichnet t durch ein Zufuhrsystem (9, 10, 13) kühler Luft zum Kühlen von darin aufbewahrten Getränken.

4. Behälter nach Anspruch 3, **dadurch gekennzeichnet, daß** die Luftzufuhr zwischen kühler Außenluft und von einer Klimaanlage erzeugter kühler Luft umschaltbar ist.

5. Behälter nach einem der Ansprüche 3 oder 4, **gekennzeichnet durch** eine Absperrschaltung für die kühle Luft beim Öffnen des Behälters (14).

6. Behälter nach einem der Ansprüche 3 bis 5, **dadurch gekennzeichnet**, d ass die kühle Luft einem Handschuhkasten (14) in einer Armaturentafel (2) zuführbar ist.

7. Behälter nach Anspruch 6, **dadurch gekennzeichnet, dass** das Zufuhrsystem (9, 10, 13) kühler Luft in einer Öffnung (10) in der Seitenwand (15) des Handschuhkastens (14) mündet, der ausklappbare Behälterdeckel (1) des Handschuhkastens (14) die zur Seitenwand (15) des Handschuhkastens (14) benachbarte und dazu parallel bewegliche, die Öffnung (10) in der geöffneten Stellung verdeckende Seitenwand (16) mit einer in der geschlossenen Stellung mit der Öffnung (10) in der Seitenwand (15) des Handschuhkastens (14) fluchtende Seitenwandöffnung (9) aufweist.

## Claims

1. Container (14) for cans in a motor vehicle, having a can holder (7) which is arranged on a side wall (16) of a container cover (1) which can be swung in and out, the can holder (7) being held horizontally when the container cover (1) has been swung out, **characterized in that** the can holder (7), on its side facing away from a hinge (3) of the container cover (1), is coupled to the side wall (16) by a coupling means (12), and a pin (4) of the can holder (7), which pin is spaced apart from the coupling means (12), reaches through a slot (5) in the side wall (16) of the container cover (1) and engages in a slot-like guide (6) in an adjacent side wall (15) of the container (14), the slot (5) and the guide (6) being arranged with respect to each other by means of guide kinematics (4, 5, 6) in such a manner that the can holder (7) is held horizontally as the container cover (1) is swung in and up.

2. Container according to Claim 1, **characterized in that** the container cover (1) is designed as a glove-compartment cover which can be swung downwards about a horizontal axis.

3. Container according to Claim 1 or 2, **characterized by** a system (9, 10, 13) for supplying cool air for cooling beverages stored in the said container.

4. Container according to Claim 3, **characterized in that** the air supply can be switched over between cool external air and cool air produced by an air-conditioning system.

5. Container according to either of Claims 3 and 4, **characterized by** a shut-off circuit for the cool air when the container (14) is opened.

6. Container according to one of Claims 3 to 5, **characterized in that** the cool air can be supplied to a glove compartment (14) in a dashboard (2).

7. Container according to Claim 6, **characterized in that** the system (9, 10, 13) for supplying cool air discharges into an opening (10) in the side wall (15) of the glove compartment (14) and the swing-out container cover (1) of the glove compartment (14) has the side wall (16) which is adjacent to the side wall (15) of the glove compartment (14) and can be moved parallel thereto and, in the opened position, covers the opening (10) and has a side wall opening (9) which, in the closed position, is aligned with the opening (10) in the side wall (15) of the glove compartment (14).

## Revendications

1. Récipient (14) pour canettes de boissons dans un véhicule, avec un support (7) de canettes de boissons disposé sur une paroi latérale (16) d'un couvercle de récipient (1) rabattable et déployable, le support (7) de canettes de boissons étant maintenu à l'horizontale lorsque le couvercle (1) du récipient est déployé, **caractérisé en ce que** sur son côté non tourné vers une charnière (3) du couvercle (1) du récipient, le support (7) de canettes de boissons est articulé à la paroi latérale (16) au moyen d'une articulation (12), et un tourillon (4) situé à distance de l'articulation (12) du support (7) de canettes de boissons traverse une fente (5) ménagée dans la paroi latérale (16) du couvercle (1) du récipient et s'engage dans un guide (6) en forme de fente ménagé dans une paroi adjacente (15) du récipient (14), la fente (5) et le guide (6) étant mutuellement conjugués au moyen d'une cinématique de guidage (4, 5, 6) de telle sorte que lorsque le couvercle (1) du récipient est rabattu ou déployé, le support (7) de canettes de boissons est maintenu à l'horizontale.

2. Récipient selon la revendication 1, **caractérisé en ce que** le couvercle (1) du récipient est configuré comme couvercle de boîte à gants apte à basculer vers le bas autour d'un axe horizontal.

3. Récipient selon la revendication 1 ou 2, **caractérisé par** un système (9, 10, 13) d'amenée d'air frais pour rafraîchir les boissons qui y sont conservées.

4. Récipient selon la revendication 3, **caractérisé en ce que** l'amenée d'air est commutée entre de l'air extérieur frais et de l'air frais créé par une installation de climatisation.

5. Récipient selon l'une des revendications 3 ou 4, **caractérisée par** une interruption de l'arrivée d'air frais lors de l'ouverture du récipient (14).

6. Récipient selon l'une des revendications 3 à 5, **caractérisé en ce que** l'air frais peut être amené à une boîte à gants (14) d'un tableau de bord (2).

7. Récipient selon la revendication 6, **caractérisé en ce que** le système (9, 10, 13) d'amenée d'air frais débouche dans une ouverture (10) de la paroi latérale (15) de la boîte à gants (14), le couvercle (1) rabattable du récipient de la boîte à gants (14) présentant la paroi latérale (16) adjacente à la paroi latérale (15) de la boîte à gants (14), mobile, parallèle à cette dernière et recouvrant l'ouverture (10) dans la position ouverte, une ouverture (9) de la paroi latérale étant alignée sur l'ouverture (10) de la paroi latérale (15) de la boîte à gants (14) en position fermée.
